# EUROPEAN PATENT APPLICATION

(11) **EP 4 186 997 A1**
(43) Date of publication of application: **31.05.2023**
(21) Application number: 21210659.5
(22) Date of filing: 26.11.2021
(51) Int. Cl.: C25B 1/16, C01D 1/32, C01D 15/02, C25B 15/08

(54) **PREPARATION OF LITHIUM HYDROXIDE**

(71) Applicant: K-UTEC AG Salt Technologies, 99706 Sondershausen (DE)
(72) Inventor: Marx, Heinrich, Spiesen-Elversberg (DE); Pfänder, Markus, Erfurt (DE); Schultheis, Bernd, Kyffhäuserland (DE); Ney, Christoph, Sondershausen (DE); Heß, Jenny, Nordhausen (DE)
(74) Representative: Grünecker Patent- und Rechtsanwälte PartG mbB

(57) **Abstract**

The invention relates to a method of using an aqueous solution discharged from an electrochemical apparatus for converting lithium salt dissolved in water to lithium hydroxide and the acid corresponding to the lithium salt, to produce lithium hydroxide monohydrate with simultaneous conversion of this solution to the catholyte required to enter the electrochemical apparatus. The conversion of the aqueous solution into the catholyte is preferably accomplished by a balance discharge of lithium hydroxide monohydrate as a wet product, cooling of the catholyte to remove to balance the amount of heat introduced into the catholyte with the electrochemical process, and balance refreshing of the catholyte with lithium salt in a stirred vessel. In an additional washing step, the balance of the water also reacted during the electrochemical conversion of the lithium salts used is balanced. The lithium hydroxide monohydrate product thus produced is also an object of the invention.

## Description

### BACKGROUND

Lithium hydroxide is of great need for the production of rechargeable batteries. The electrochemical conversion of lithium salts into lithium hydroxide is a well-known and commonly used process. Inventions pertaining to this process of the electrochemical conversion reaction of an aqueous solution containing lithium salts relate mainly to the use of a bipolar membrane electrodialysis. Inventions involving further processing of the resulting lithium hydroxide-containing solution to produce lithium hydroxide monohydrate are based on the use of evaporation crystallization, which is highly energy consuming.

For example, the WO2009/131628 describes the preparation of lithium hydroxide monohydrate by electrochemical conversion, whereby in subsequent steps chlorine is converted into hydrochloric acid and lithium hydroxide is obtained by concentrating the catholyte solution by means of dehydration and subsequent crystallization of lithium hydroxide monohydrate.

In WO2014/026217, a lithium-containing input material is used to prepare a lithium chloride-containing solution, which is subsequently used, after one or more purification steps, to obtain lithium hydroxide monohydrate by electrolysis and subsequent evaporation crystallization.

CN000106011917 describes the extraction of lithium hydroxide monohydrate from a natural brine, whereby after several process steps a solution containing lithium chloride is obtained which serves as starting material for further process steps. The production process for lithium hydroxide monohydrate from this starting solution involves electrolysis and subsequent evaporation crystallization.

WO2013/159194 and WO2014/138933 each describe a process for the electrochemical production of lithium hydroxide by means of a three-chamber electrode with the possibility of a bipolar process in which the material stream containing the lithium salt is introduced into the middle chamber and the lithium hydroxide-containing catholyte stream is discharged from the electrochemical process. A description of the further processing up to the crystalline lithium hydroxide monohydrate is not available.

WO2010/056322 describes the electrochemical conversion of lithium sulphate present in aqueous solution from a LiFePO₄ process into a lithium hydroxide solution and sulphuric acid. The solution containing lithium hydroxide is converted into LiFePO₄ in the subsequent processing step.

WO2020/069558 describes a process by which a lithium-containing aqueous solution is first purified of sulphate, divalent cations and borates in three process steps known per se and then fed to an electrolysis step. The subsequent crystallization of lithium hydroxide monohydrate is preferably carried out by a multi-stage evaporation crystallization.

CN 000110065958 discloses a process for integrating selective electrodialysis and selective bipolar membrane electrodialysis for treating a lithium-containing natural brine to produce lithium hydroxide. The process comprises the steps: Purification of the solution of calcium and magnesium by introducing the natural brine into a monovalent selective electrodialysis apparatus and adding oxalic acid to the solution exiting from the electrodialysis apparatus, subsequent treatment by ion exchange with a weak acid cation chelating resin; introducing the obtained brine into the monovalent selective electrodialysis apparatus to concentrate lithium ions and meanwhile further reduce the content of magnesium ions, applying subsequent evaporation crystallization of the obtained lithium-containing brine to crystallize lithium chloride; re-dissolving it and introducing the obtained lithium chloride solution into a monovalent selective bipolar membrane electrodialysis apparatus to produce lithium hydroxide and hydrochloric acid.

CN 000108341420 describes a process for the direct production of lithium hydroxide and lithium carbonate from a lithium-containing natural brine with a high magnesium : lithium ratio. After separation of the potassium salts in a salt pan, the brine obtained is concentrated in another evaporation pond to produce a brine rich in borate and lithium with a low potassium and sodium content. Borates are then extracted from the resulting brine to obtain a boric acid product and the lithium brine. The lithium brine is refined in three rounds and then fed to a bipolar membrane electrodialyser to produce a lithium hydroxide solution. This is then concentrated in an evaporative crystallizer and lithium hydroxide monohydrate is crystallized. The lithium hydroxide monohydrate is washed and recrystallized to obtain battery grade lithium hydroxide. The mother liquor and wash solution are fed to a gas-liquid reactor to produce lithium carbonate with carbon dioxide gas.

CN 000106946275 also describes a process for the direct production of battery-grade lithium hydroxide monohydrate from lithium-rich natural brine. After the separation of impurities from the lithium-rich natural brine, successive further purification with a boron adsorption resin and a chelate resin is carried out to obtain a purified lithium-rich brine. This solution is fed to a bipolar membrane electrodialysis device to obtain an alkali solution and an acid solution. After evaporation of the alkali solution and crystallization of lithium hydroxide monohydrate, it is dissolved again in water and re-crystallized by another evaporation crystallization. After washing with water and drying the separated crystals, the lithium hydroxide monohydrate is obtained in battery quality.

WO2016/182337 describes a process for the production of lithium hydroxide and lithium carbonate with a bipolar electrodialysis as a central aspect of the invention. Thus, on the one hand, the impurities with divalent ions are removed and, on the other hand, lithium is concentrated in the lithium-containing solution and simultaneously converted into lithium hydroxide. Lithium carbonate is then obtained by carbonating the lithium hydroxide.

There is a need for a simplified, reliable and less energy consuming way of producing lithium hydroxide monohydrate in crystalline form.

### SUMMARY OF THE INVENTION

The invention makes use of an aqueous solution in the following cathode reaction

(1) 2 H₂O + 2e⁻ → H₂ + 2 OH⁻

and the following exchange reactions

(2) 2 OH⁻ + 2/a LiₐX →2 LiOH + 2/a X^{a-}

(a = 1, 2, 3; X = mono-, di- or tri-valent anion, respectively; typical monovalent anions are NO₃⁻, Cl⁻, Br, I⁻; typical divalent or trivalent anions are SO₄²⁻, PO₄³⁻ as well as different borates, such as BO²⁻, B₃O₅²⁻, B₄O₇²⁻, and preferred anions are Cl⁻ and SO₄²⁻)

(3) 2/a X^{a-} + 2H⁺ →2/a HₐX

and the following anode reaction

(4) H₂O → ½O₂ + 2 H⁺ + 2 e⁻

take place in order to obtain lithium hydroxide monohydrate.

In sum, the reaction is 3 H₂O + 2/a LiₐX → 2/a HₐX + 2 LiOH + H₂ + ½O₂.

The lithium ion and the anion of the lithium salt are separated from each other within the electrochemical apparatus according to known procedures. In the course of this process, the previously used lithium salt is consumed in the electrochemical apparatus and lithium hydroxide and the acid corresponding to the anion are formed instead. As a result, the concentration of the dissolved lithium salt is reduced to a final working concentration. The concentration of lithium hydroxide increases according to the mass transfer.

If LiCI is used as Lithium salt, the invention makes use of an aqueous solution in the following cathode reaction

(1a) 2 H₂O + 2 e⁻ → H₂ + 2 OH⁻

and the following exchange reactions

(2a) 2 OH- + 2 LiCl →2 LiOH + 2 Cl⁻

(3a) 2 Cl⁻ + 2 H⁺ →2 HCl

and the following anode reaction

(4a) H₂O → ½O₂ + 2 H⁺ + 2 e⁻

take place in order to obtain lithium hydroxide monohydrate.

In sum, the reaction is 3 H₂O + 2 LiCI → 2 HCI + 2 LiOH + H₂ + ½O₂.

All these reactions (1a) - (4a) are the same *mutatis mutandis* for the other monovalent anions, such as NO₃⁻, Br⁻, I⁻, wherein monovalent anions, such as NO₃⁻, Br⁻, I⁻, replace the Cl⁻ in the above reactions (1a) - (4a), e.g. LiCl is replaced by LiBr, LiNO₃ and LiI, respectively and HCl is replaced by HBr, HNO₃ and HI, respectively.

If Li₂SO₄ is used as Lithium salt, the invention makes use of an aqueous solution in the following cathode reaction

(1b) 2 H₂O + 2 e⁻ → H₂ + 2 OH⁻

and the following exchange reactions

(2b) 2 OH- + Li₂SO₄ →2 LiOH + SO4²⁻

(3b) SO₄²⁻+ 2 H⁺ → H₂SO₄

and the following anode reaction

(4b) H₂O → ½O₂ + 2 H⁺ + 2 e⁻

take place in order to obtain lithium hydroxide monohydrate.

In sum, the reaction is 3 H₂O + Li₂SO₄ → H₂SO₄ + 2 LiOH + H₂ + ½O₂.

All these reactions (1b) - (4b) are the same *mutatis mutandis* for the other divalent anions, such as BO²⁻, B₃O₅²⁻, B₄O7²⁻, wherein divalent anions, such as BO²⁻, B₃O₅²⁻, B₄O7²⁻, replace the SO4²⁻ in the above reactions (1b) - (4b), e.g. Li₂SO₄ is Li₂BO, Li₂B₃O₅ and Li₂B₄O₇, respectively and H₂SO₄ is H₂BO, H₂B₃O₅ and H₂B₄O₇, respectively.

If Li₃PO₄ is used as Lithium salt, the invention makes use of an aqueous solution in the following cathode reaction

(1c) 2 H₂O + 2 e⁻ → H₂ + 2 OH⁻

and the following exchange reactions

(2c) 2 OH- + 2/3 Li₃PO₄ →2 LiOH + 2/3 PO₄³⁻

(3c) 2/3 PO₄³⁻+ 2 H⁺ →2/3 H₃PO₄

and the following anode reaction

(4c) H₂O → ½O₂ + 2 H⁺ + 2 e⁻

take place in order to obtain lithium hydroxide monohydrate.

In sum, the reaction is 3 H₂O + 2/3 Li₃PO₄ → 2/3 H₃PO₄+ 2 LiOH + H₂ + ½O₂.

All these reactions (1c) - (4c) are the same *mutatis mutandis* for other trivalent anions.

Due to the ohmic resistance of the overall system to the charge transport of the electrochemical process and a partial recombination of the hydroxide with hydrogen ions to water as an exothermic side reaction, heat is released parasitically to the desired material conversion. As a result, the temperature of the aqueous solution at the exit of the cathode chamber of the electrochemical apparatus is increased compared to the temperature of the catholyte at the entry point of the cathode chamber. The anion separated from the lithium ion combines with the proton released in the anode reaction to form the acid corresponding to the anion. This process step is also already known and is not an object of the present invention.

In order to obtain lithium hydroxide as a monohydrate in solid form, it is necessary to first supersaturate it from the aqueous solution leaving the cathode chamber of the electrochemical apparatus in order to subsequently crystallize it. As explained in the description of the prior art, the only process currently available is evaporation crystallization to concentrate the lithium hydroxide contained in the catholyte above the saturation limit and to crystallize it as lithium hydroxide monohydrate. Since this requires a high energy and technical input, this task has not yet been satisfactorily solved with the current state of the art. The enthalpy of evaporation required for this process step leads either to high specific energy consumption or to the need for a technically complex, energy-optimised evaporation plant with high investment requirements.

The present invention has solved the problem of crystallising lithium hydroxide monohydrate without necessarily evaporating water in an energy-consuming manner.

According to the present invention, crystallising of lithium hydroxide monohydrate and regenerating of the catholyte for refeeding into the electrochemical apparatus take place in one and the same process, preferably in one and the same closed process, preferably in one and the same process step in which the lithium salt is added to the lithium hydroxide solution leaving the electrochemical apparatus. The lithium hydroxide solution leaving the electrochemical apparatus is preferably almost saturated, more preferably saturated or most preferably supersaturated.

To achieve this, the lithium salt electrochemically converted to lithium hydroxide is supplemented and, accordingly, the electrochemically generated lithium hydroxide is removed from the catholyte. Surprisingly, it has been shown that suitable concentrations of lithium salt can be set in order to precipitate the lithium hydroxide from the lithium hydroxide solution continuously leaving the electrochemical apparatus. The invention is applicable to electrochemical processes involving lithium salts and concentration ranges in which the lithium hydroxide precipitates with increasing concentration of lithium salt and with decreasing temperature. In one embodiment the lithium salt is more soluble in water than lithium hydroxide, i.e. has a larger solubility product constant than LiOH. The less soluble lithium hydroxide is, thus, precipitated from the solution, once the lithium salt is added.

Examples of suitable lithium salts are lithium chloride, lithium bromide, lithium iodide, lithium nitrate, lithium sulfate, lithium phosphate and borates of lithium. Preferred are lithium chloride, lithium sulfate and lithium phosphate.

In a preferred embodiment, the electrochemically consumed water is added to the lithium solution to be introduced into the electrochemical apparatus in order to replenish the loss by electrochemical water consumption. In still another embodiment, the amount of heat introduced during the electrochemical process is removed from the catholyte by cooling the lithium hydroxide solution. More preferably, the method of the present invention comprises a step of adding water to the lithium solution to be introduced into the electrochemical apparatus and a step of cooling the lithium hydroxide solution.

Surprisingly, it has been shown that - according to the present invention - there is no need for a step of performing evaporation crystallization or other energy-consuming process steps to produce crystalline lithium hydroxide monohydrate.

Surprisingly, it has also been shown that suitable concentrations of lithium salt and lithium hydroxide in the aqueous solution continuously leaving the electrochemical apparatus can be set as working points with which, on the one hand, optimized current yields in the electrochemical apparatus can be achieved and, on the other hand, the recovery of the lithium hydroxide monohydrate can be combined with the regeneration of the catholyte in a closed process cycle.

The invention is based on crystallizing lithium hydroxide monohydrate with high purity by adding an amount of lithium salt corresponding to the mass transfer in the electrochemical apparatus. Preferably, the amount of water corresponding to the mass transfer in the electrochemical apparatus is added. Thereby the added water avoids depletion of the aqueous solution, so that it continuously enters the electrochemical apparatus as a catholyte with constant chemical composition and concentration. More preferably, the water can simultaneously be used as wash water.

In a preferred embodiment, the precipitation of lithium hydroxide is performed under cooling. Cooling can be performed using jacket cooling, vacuum cooling, forced circulation cooling using an external heat exchanger.

In a preferred embodiment, cooling can be set so that the aqueous solution entering the electrochemical apparatus has a constant temperature. This enables the electrochemical conversion of substances with optimum current yield in the electrochemical apparatus, so that the aqueous solution leaving the electrochemical apparatus also remains constant in its composition and temperature and the process cycle can thereby be closed.

Depending on the working concentration of lithium salt and lithium hydroxide in the aqueous solution leaving the electrochemical apparatus, it may be necessary to dissipate a greater or lesser amount of heat than that corresponding to the heat generated in the electrochemical apparatus in order to readjust the chemical composition. In this case, the difference to this amount of heat must be compensated after the adjustment of the chemical composition and before re-entry into the electrochemical apparatus.

A greater heat extraction for the balance discharge of the lithium hydroxide produced is possible, but must be compensated accordingly before the catholyte is introduced into the electrochemical apparatus, so that the temperature in the electrochemical process can be kept constant.

Without taking into account material carry-over, e.g. due to brine adhering to the lithium hydroxide monohydrate, the regeneration takes place in such a way that the molar amount of crystallized lithium hydroxide monohydrate is equal to the molar amount of lithium in the added lithium salt. Under real conditions, these quantity ratios have to be corrected slightly due to material carry-over.

The invention is applicable to electrochemical processes involving lithium salts and concentration ranges in which the lithium hydroxide precipitates with increasing concentration of lithium salt and with decreasing temperature. In one embodiment. The lithium salt is more soluble in water than lithium hydroxide, i.e. has a larger solubility product constant than LiOH. The less soluble lithium hydroxide is, thus, precipitated from the solution, once the lithium salt is added. Lithium salts and lithium hydroxide are present as dissolved salts in the aqueous solution leaving the electrochemical apparatus. The catholyte and the solution leaving the electrochemical apparatus consist of an at least ternary solution system with at least one lithium salt, lithium hydroxide and water as components. Other dissolved salts such as salts of the elements of the alkali metals can be tolerated in different concentrations, but are only relevant for the process if they significantly influence the solubility of lithium hydroxide with the change in temperature without negatively affecting the product purity.

By continuously discharging the aqueous solution from the electrochemical apparatus and continuously feeding the catholyte into the electrochemical apparatus, the electrochemical apparatus can be operated under constant time conditions. By selecting the flow rates, amount of lithium salt added and temperatures, the process can be adapted to an optimal operation of the electrochemical process. The only additional consumption to be taken into account is the heat dissipation during cooling and heat supply for reheating, which exceeds the heat input by the electrochemical process.

### DESCRIPTION OF THE FIGURES

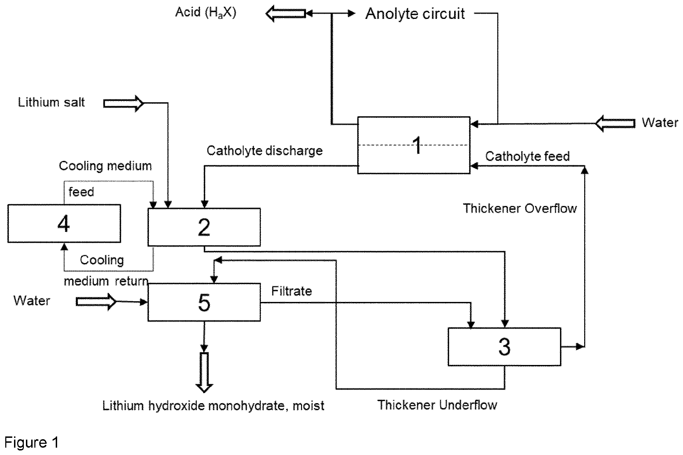

Figure 1 describes the process underlying the invention. An aqueous solution continuously discharged from the electrochemical apparatus (1) is fed into a stirred vessel (2). The lithium salt and the underflow of a subsequent clarifier (3) are introduced into this container under cooling. The quantity flow of lithium salt introduced is determined by the quantity flow of the catholyte and the material turnover within the electrochemical apparatus to balance the lithium consumed in the electrochemical process. With cooling, at least the heat introduced into the catholyte in the electrochemical apparatus is removed, taking into account the enthalpies of dissolution and crystallization of the dissolved and crystallized substances. Cooling is carried out with known methods of cooling **crystallization,** for example starting from a cooling unit or cooling apparatus (4), by means of a circulating cooling medium which either cools the stirred vessel directly or an external heat exchanger through which the suspension produced in the stirred vessel (2) is pumped, which then flows back into the stirred vessel (2). The volume displaced by the media fed into the stirred vessel (2) is compensated for by the discharge of the suspension produced in the stirred vessel (2). This passes onto an apparatus for solid-liquid separation ("separation unit") (5). The resulting filtrate passes into a clarifier (3) and from this the overflow is pumped back into the electrochemical apparatus (1). Instead of using a clarifier, fine filtration can also be carried out in one or more stages, in which case the filtrate is pumped directly into the electrochemical apparatus (1). The filter cake is washed with water and then discarded as a wet product. The wash filtrate is a component of the filtrate transferred to the clarifier (3) or directly to the electrochemical apparatus (1).

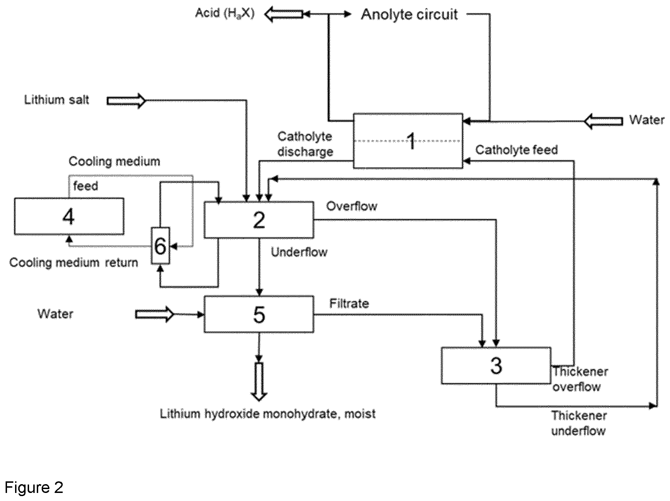

In a preferred process variant, the aqueous solution discharged from the electrochemical apparatus (1) is transferred into a stirred container with an integrated clarification zone (2) as shown in Figure 2. The introduction of the aqueous solution into the stirred container (2) takes place synchronously with the introduction of the lithium salt. The cooling takes place starting from a cooling unit or cooling apparatus (4) by means of a circulating cooling medium which cools an external heat exchanger through which the suspension produced in the stirred vessel (2) is pumped, which then flows back into the stirred vessel (2). The overflow of the stirred tank, which is low in solids and has an integrated clarification zone (2), is collected in a clarifier (3) to achieve a quasi complete absence of solids. The underflow of the stirred tank with integrated clarification zone (2) is fed to an apparatus for solid-liquid separation (5). The resulting filtrate enters a clarifier (3). The overflow of the clarifier (3) goes into the electrochemical apparatus (1) and the underflow back into the stirred tank with integrated clarification zone (2). The filter cake is washed with water and then discarded as a wet product. The wash filtrate is a component of the filtrate transferred to the clarifier (3).

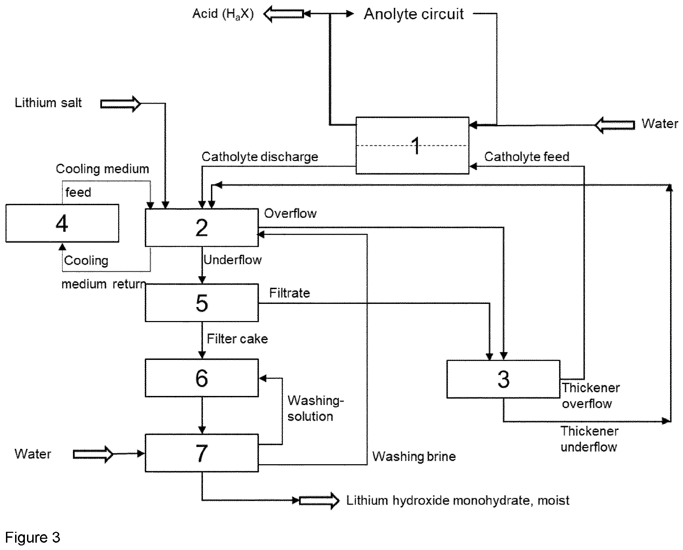

In a particularly preferred variant of the process shown in Figure 3, according to the preferred process variant described above, the moist filter cake, after separation of the solids in a first apparatus for solid-liquid separation (5), is discharged into a further stirred vessel (6) and mixed with a washing filtrate after a further solid-liquid separation. This suspension is transferred to a second apparatus for solid-liquid separation (7), the filter cake thus obtained is washed with a quantity of water which may be 5 to 2 times that of the filter cake. The resulting wash filtrate is used for mixing with the moist product obtained after the first solid-liquid separation in the second stirred vessel (6). The wet, washed product is discharged from the second solid-liquid separation apparatus.

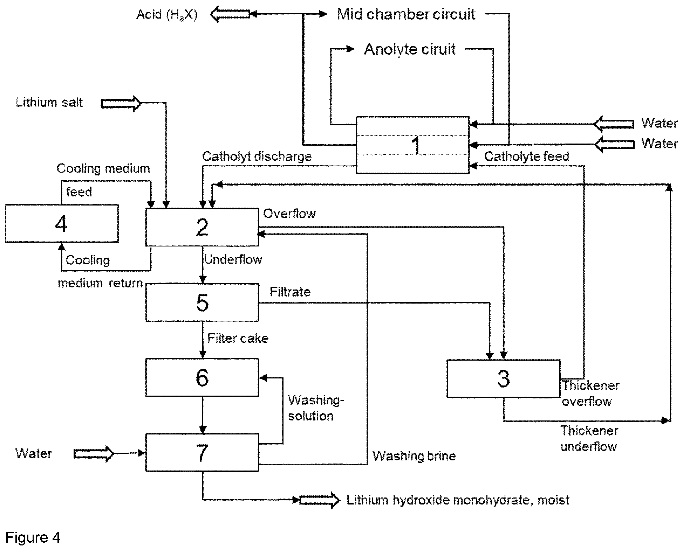

In a particularly preferred variant of the process, the electrochemical apparatus consists of three reaction chambers as shown in Figure 4, whereby the chambers are separated from each other by ion exchange membranes.

The process according to the invention results in a washed filter cake which is very coarse-grained as dried lithium hydroxide monohydrate. The distribution of the particle sizes shows that the sum of all grains having a grain diameter larger than two tenths of a millimetre has a mass fraction of at least fifty percent and the sum of all grains having a grain diameter smaller than eight hundredths of a millimetre has a mass fraction of not more than ten percent with respect to the total mass. This product is part of the invention.

Further provided is an electrochemical crystallization apparatus, which is suitable for performing the method of the invention.

### DETAILS OF THE INVENTION

Provided herein is a process for the production of lithium hydroxide monohydrate from an aqueous solution emerging from an electrochemical apparatus, in which water is hydrolyzed with the following cathode reaction (1):

(1) 2 H₂O + 2e⁻ → H₂ + 2 OH⁻

and the following exchange reactions (2) and (3)

(2) 2 OH⁻ + 2/a LiₐX →2 LiOH + 2/a X^{a-}

(a = 1, 2, 3; X = mono-, di- or tri-valent anion, respectively)

(3) 2/a X^{a-} + 2H⁺ →2/a HₐX

characterized in that
lithium hydroxide monohydrate is precipitated from an aqueous solution emerging from the electrochemical apparatus by adding the lithium salt LiₐX to the aqueous solution emerging from the electrochemical apparatus.

In this way, the conversion of lithium salt dissolved in water into lithium hydroxide is affected.

With a further anode reaction (4)

(4) H₂O → ½O₂ + 2 H⁺ + 2e⁻

the acid corresponding to the lithium salt is formed by combination with the released protons 2H⁺ of the anode reaction forming 2/a HₐX.

The process is preferably a closed process. This means that the process has to be supplied with the consumed lithium salt and water and discharged with the products lithium hydroxide monohydrate, the acid HₐX, oxygen and hydrogen. All other streams more preferably remain in the process and there is no bleed stream required.

In a preferred embodiment, the process further comprises a step of cooling the aqueous solution from which LiOH · H₂O is precipitated.

More preferably, the amount of heat removed in the cooling step is balanced with at least the amount of heat introduced with the electrochemical process in the cathode chamber, i.e. the temperature in the aqueous solution in the electrochemical apparatus is constant. More preferably, the amount of heat removed in the cooling step is the same as the amount of heat introduced in the electrochemical process.

In a further preferred embodiment, the process of the invention further comprises the addition of water to compensate for the loss of water in the electrochemical process in the cathode chamber. Preferably, the process of the invention takes place in a closed continuous process, i.e. the amount of lithium hydroxide and water in the aqueous solution in the electrochemical apparatus is kept constant because the produced LiOH is continuously discharged. More preferably, the temperature in the aqueous solution in the electrochemical apparatus is constant as well.

In a further preferred embodiment of the process of the invention, the conversion of the aqueous solution emerging from the electrochemical apparatus into the catholyte required for entry into the electrochemical apparatus is performed by
(i) discharging lithium hydroxide monohydrate as a moist product,
(ii) cooling of the aqueous solution to remove at least the amount of heat introduced with the electrochemical process in the cathode chamber and
(iii) refreshing of the aqueous solution with lithium salt, thereby replacing the molar lithium amount lost due to the discharged lithium hydroxide monohydrate
in a closed circuit.

In a further preferred embodiment of the process according to the invention, a product purity of lithium hydroxide monohydrate is achieved after an additional washing step, in which no more than three (3) parts by mass of one thousand in the product are constituents other than lithium hydroxide or water. These impurities are measured by standardized analytical methods such as ICP-OES (DIN EN ISO 11885-E22:09-09) for metals or volumetric methods (DIN 38 405-D) for anions.

In a further preferred embodiment of the process of the invention, the discharge of lithium hydroxide monohydrate is affected by the crystallization of lithium hydroxide monohydrate in a vessel under stirring. The discharge rate of lithium hydroxide monohydrate accordingly is dependent from the crystallization rate of lithium hydroxide monohydrate crystalized in said vessel. This rate is identical to the lithium hydroxide related production rate in the electrochemical apparatus. The quantity of lithium hydroxide produced in the electrochemical apparatus is identical to the quantity discharged.

Preferably the stirred vessel (2) has an integrated or external clarification zone, as a result of which the average residence time of solid and solution can be modified and thereby, due to the crystallization conditions favorably set, a coarse crystalline product is formed. The solid product can be separated from the liquid by filtration or centrifugation. After solid-liquid separation and washing with a small amount of water, a pure lithium hydroxide monohydrate is obtained in which there are not more than three (3) parts per thousand by weight of constituents other than lithium hydroxide or water.

In a further preferred embodiment of the process of the invention, the lithium salt is supplied in solid form and dissolved in the aqueous solution with simultaneous crystallization of lithium hydroxide. The amount of lithium salt to be added depends upon the conversion rate of the electrochemical apparatus. For example, a catholyte solution of an original mass of 1 t and containing 276 kg of lithium chloride and 34 kg of lithium hydroxide is leaving the electrochemical apparatus with a mass of 990 kg containing 264 kg of lithium chloride and 41 kg of lithium hydroxide. It requires an addition of 12 kg of lithium chloride as a solid or in a concentrated lithium chloride solution in order to compensate the electrochemical conversion and to salt out the produced lithium hydroxide as monohydrate. In a dissolved status the water which is entering the process with the lithium chloride need to be considered in a later washing step.

In a further preferred embodiment of the process of the invention, the aqueous solution emerging from the electrochemical apparatus is pumped through an external heat exchanger for cooling. Preferably, the aqueous solution emerging from the electrochemical apparatus is contained in the stirred vessel, preferably with an integrated clarification zone, and is pumped through an external heat exchanger for cooling and the cooled suspension is pumped back into the stirred vessel, thereby constantly regulating the temperature therein. More preferably, the temperature is regulated in a range from 0 degrees Celsius to 40 °C, more preferably in the range of 10-30 °C, most preferably the temperature is a function of the outlet temperature of the aqueous solution from the electrochemical apparatus.

In a further preferred embodiment of the process of the invention, the amount of washing water used is between 0.5 and 2 parts by mass in relation to the product obtained. Preferably, in addition to the desired product purity, the wash water is used as compensation for the water lost in the course of the electrochemical conversion of the lithium salts used. Most preferably, no additional water is introduced into the system other than wash water.

In a further preferred embodiment of the process of the invention, the electrochemical apparatus consists of three reaction chambers, which are separated from one another by ion exchange membranes. Such three reaction chambers containing electrochemical apparatus are known in the art.

In a further aspect of the present invention, lithium hydroxide monohydrate produced according to the process of the present invention is provided.

In another aspect, of the present invention, new lithium hydroxide monohydrate is provided with particular grain parameters.

In a preferred embodiment of both aspects, the lithium hydroxide monohydrate has a grain size distribution such that the sum of all grains having a diameter greater than 0.2 mm has a mass fraction of at least 50 wt%, the sum of all grains having a grain diameter of less than 0.08 mm has a mass fraction of not more than 10 wt% with respect to the total mass.

In one embodiment of the invention, the solution emerging from the electrochemical apparatus (1) is pumped in stages or continuously into a jacket-cooled stirred vessel (2) and mixed therein with the lithium salt added by means of a commercial conveying unit. Instead of dosing the solid, the lithium salt can also be pumped into the stirred tank in dissolved form. The cooling medium is provided by a suitable cooling unit, e.g. a commercial cooler (4). The resulting suspension is pumped to an apparatus for solid-liquid separation (5) (also denominated "separation unit"), ideally a screen basket centrifuge, optionally after a prior concentration of the solids by means of a clarifier (3) (also denominated "thickener") before feeding to the centrifuge has proven useful. The filtrate flows into the clarifier, where the entrained solid particles are collected at the clarifier underflow and pumped as a suspension into the stirred vessel (2). The overflow of the clarifier is pumped into the electrochemical apparatus (1) to keep the volume of the catholyte constant. In order to achieve the required product purity water is added to wash the filter cake. The washing solution is combined with the process liquor filtrate and guided to the thickener (3). This is shown in Figure 1

In a further aspect of the present invention, a device for preparing lithium hydroxide monohydrate is provided. In one embodiment, the device is an electrochemical crystallization apparatus comprising
(a) an electrochemical apparatus (1) containing a cathode compartment with inlet and outlet and an anode compartment,
(b) a vessel (2) having an inlet and an outlet and a stirrer connected by a feed line to the outlet of the cathode compartment,
(c) a cooling unit (4) for performing cooling crystallization in the vessel (2) by cooling an aqueous suspension or solution in the vessel (2),
(d) a separation unit (5) for separating crystals from the aqueous suspension or solution, comprising an inlet connected directly or indirectly through a feed line to the outlet of the vessel (2), the separation unit (5) further comprising an outlet for discharging the separated crystals and an outlet for the filtrate, wherein the outlet for the filtrate is directly or indirectly connected through a feed line with the inlet of the cathode compartment.

In a preferred embodiment, the vessel (or "stirred vessel") comprises a draft tube, clarification ring and deflection ring to create an integrated clarification zone causing an overflow to be poor in solids and enabling an underflow which is enriched in lithium hydroxide monohydrate.

In still another preferred embodiment, the cooling unit (4) is is an external heat exchanger that cools the lithium hydroxide monohydrate suspension pumped in the circuit.

In a further embodiment, the separation unit (5) is a filter or a centrifuge, separating lithium hydroxide monohydrate with a low moisture and providing the option to wash the filter cake.

In a preferred embodiment of the invention, the electrochemical apparatus (1) further comprises a clarifier (3) (also herein denominated "thickener (3)"), connected with the outlet of the stirred vessel (2) for enriching the solid concentration in the aqueous suspension or solution before entering the separation unit (5).

The stirred vessel in a preferred embodiment comprises internal elements as described by Frank et al. in patent specification DD 261479 for reduction of fines in the crystallization step. More preferably, the stirred vessel (2) further comprises a deflection ring, as e.g. described by Georgi et al. in the patent specification DD 227615 in order to generate a pre- clarified overflow of that device which then requires only the sedimentation of the very fine particles. Those particles can be recycled into the device to provide seeds for the lithium hydroxide monohydrate.

In a preferred embodiment the stirred vessel (2) is a loop reactor as described for example in patent specification DD261479, which is cooled by pumping the product suspension in the loop reactor through a cooling unit (4), which in this embodiment is an external heat exchanger. The further material flow is divided in the loop reactor into an overflow with low solids content, which enters the clarifier (or "thickener") (3), and an underflow with high solids content, which is pumped into a solids-liquid separator unit (5) either immediately or after further enrichment of solids by known methods. There the filter cake is washed and the combined filtrates are guided to the thickener (3). Deviating from the above description, the underflow of the thickener (3) is pumped back into the loop reactor (2) and with it, lithium hydroxide monohydrate nuclei which support the production of particularly coarse-grained lithium hydroxide monohydrate. The thickener overflow is recycled to the catholyte circuit in the electrochemical apparatus (1). This embodiment is shown in figure 2.

In this way, a very coarse-grained lithium hydroxide monohydrate product is produced. In a commercially available lithium hydroxide monohydrate product, the grain size fraction between 0.5 mm and 1 mm is typically the most represented by mass. The product resulting from the preferred embodiment has a mass majority with an almost double diameter between 1 mm and 2 mm. This facilitates the dewatering and washing process as less adhering salt solution needs to be removed.

To further improve product purity, the above preferred embodiment can be further modified that the solids-rich underflow leaving the cooled stirred vessel (2), is pumped into the solid-liquid separator apparatus (5) either immediately or after further solids enrichment, according to known methods, while the filtrate flowing out of this apparatus enters the thickener (3), the filter cake is suspended in an stirred vessel (6) for further purification. Wash filtrate of the subsequent process step is used to generate this suspension which is again transferred to a further solid-liquid separation apparatus (7). The filtrate passes to the loop reactor (2) and the filter cake is washed with water and filtered whereby this filtrate is guided to the stirred vessel (6) to suspend the original filter cake. The preferred embodiment including the modifications for an improved product purity is shown in figure 3.

A specifically preferred embodiment considers a three-chamber electrochemical apparatus (1), comprising a middle chamber, in which each of the chambers are separated by ion-exchanger membranes. This embodiment creates a very pure acid HₐX as it is not in contact with the Anode thus that contamination by side electrochemical processes and by the anode material can be excluded at the one hand and additionally the electrode is protected against poisoning by the acid HₐX or electrochemical side reactions caused by the acid. This specifically preferred embodiment based on the preferred embodiment after the described modifications for product purity enhancement is shown in figure 4.

### EXAMPLE

A solution representing a catholyte containing 200.9 g lithium chloride 31.3 g lithium hydroxide and 523.5 g water is produced by mixing the substances and is heated to 48.4 °C in a stirred glass vessel. A quantity of 721.8 g of the solids-free starting solution is filled into a stirred vessel located in a thermostated water bath. Then 8.9 g LiCI are added to the starting solution and the mixture is cooled to 23.7 °C via the jacked of the stirred vessel. Once the temperature of 23.7 °C is reached the suspension is additionally stirred over a period of one hour. After this, the suspension is transferred into a laboratory screen bowl centrifuge for solid liquid separation. A quantity of 6.4 g of solid and 714.9 g mother liquor are obtained after the solid liquid separation. The solid is carefully dried to avoid loss of crystalline water on the one hand and absorption of CO₂ on the other, and then analyzed. X-ray diffraction and chemical analyses of the solid identified a pure lithium hydroxide monohydrate.

## Claims

1. Process for the production of lithium hydroxide monohydrate from an aqueous solution emerging from an electrochemical apparatus, in which water is hydrolyzed with the following cathode reaction (1):
(1) 2 H₂O + 2e⁻ → H₂ + 2 OH⁻
and the following exchange reactions (2) and (3)
(2) 2 OH⁻ + 2/a LiₐX →2 LiOH + 2/a X^{a-}
(a = 1, 2, 3; X = mono-, di- or tri-valent anion, respectively)
(3) 2/a X^{a-} + 2H⁺ →2/a HₐX
**characterized in that**
lithium hydroxide monohydrate is precipitated from an aqueous solution emerging from the electrochemical apparatus by adding the lithium salt LiₐX to the aqueous solution emerging from the electrochemical apparatus.

2. The process of claim 1, further comprising a step of cooling the aqueous solution from which LiOH · H₂O is precipitated.

3. The process of claim 1 or 2, further comprising the addition of water to compensate for the loss of water in the electrochemical process in the cathode chamber.

4. The process of any of claims 1-3, wherein the conversion of the aqueous solution emerging from the electrochemical apparatus into the catholyte required for entry into the electrochemical apparatus is performed by
(i) discharging lithium hydroxide monohydrate as a moist product,
(ii) cooling of the aqueous solution to remove at least the amount of heat introduced with the electrochemical process in the cathode chamber and
(iii) refreshing of the aqueous solution with lithium salt, thereby replacing the molar lithium amount lost due to the discharged lithium hydroxide monohydrate
in a closed circuit.

5. The process of any of claims 1-4, wherein after an additional washing step, a product is obtained having not more than a total of 3 parts by mass of constituents other than lithium hydroxide and water per thousand parts by mass of product.

6. The process of any of claims 1-5, wherein the discharge of lithium hydroxide monohydrate is affected by the crystallization of lithium hydroxide monohydrate in a stirred vessel.

7. The process of any of claims 1-6, wherein the lithium salt is supplied in solid form and dissolved in the aqueous solution with simultaneous crystallization of lithium hydroxide.

8. The process of claims 2-6, wherein the aqueous solution emerging from the electrochemical apparatus is pumped through an external heat exchanger for cooling.

9. The process of any of claims 2-7, wherein during the step of cooling, the aqueous solution emerging from the electrochemical apparatus and the lithium salt LiₐX are mixed in a stirred vessel from which a portion of the product suspension is continuously pumped through a heat exchanger and back into the stirred vessel.

10. A process according to any one of claims 2 to 9, wherein the stirred vessel contains internal elements so that a clarification zone is formed in the upper part of the stirred vessel.

11. The process of any of claims 1-10, wherein the amount of washing water used is between 0.5 and 2 parts by mass in relation to the product obtained.

12. The process of any of claims 1-11, wherein the electrochemical apparatus comprises three reaction chambers, which are separated from one another by ion exchange membranes.

13. Lithium hydroxide monohydrate produced according to the process of any of claims 1 -12.

14. Lithium hydroxide monohydrate, wherein the lithium hydroxide monohydrate has a grain size distribution such that the sum of all grains having a diameter greater than 1 mm has a mass fraction of at least 50 wt%, the sum of all grains having a grain diameter of less than 0.5 mm has a mass fraction of not more than 5 wt% with respect to the total mass.

15. An electrochemical crystallization apparatus comprising
(a) an electrochemical apparatus (1) containing a cathode compartment with inlet and outlet and an anode compartment,
(b) a vessel (2) having an inlet and an outlet and a stirrer connected by a feed line to the outlet of the cathode compartment,
(c) a cooling unit (4) for performing cooling crystallization in the vessel (2) by cooling an aqueous suspension or solution in the vessel (2),
(d) a separation unit (5) for separating crystals from the aqueous suspension or solution, comprising an inlet connected directly or indirectly through a feed line to the outlet of the vessel (2), the separation unit (5) further comprising an outlet for discharging the separated crystals and an outlet for the filtrate, wherein the outlet for the filtrate is directly or indirectly connected through a feed line with the inlet of the cathode compartment.
